# EUROPÄISCHE PATENTSCHRIFT

(11) **EP 2 942 425 B1**
(45) Veröffentlichungstag und Bekanntmachung des Hinweises auf die Patenterteilung: **20.11.2019**
(21) Anmeldenummer: 14167767.4
(22) Anmeldetag: 09.05.2014
(51) Int. Cl.: D01G 15/88, C21D 9/26, C21D 1/10, C21D 1/42, C21D 9/24

(54) **Ganzstahlgarnitur**
Card clothing formed from metal strips
Garniture de carde faite de bandes métalliques

(43) Veröffentlichungstag der Anmeldung: 11.11.2015
(60) Teilanmeldung: 19195680.4
(73) Patentinhaber: Groz-Beckert KG, 72458 Albstadt (DE)
(72) Erfinder: Bruske, Johannes, Dr., 72458 Albstadt (DE); Meinert, Peter, 72336 Balingen (DE); Goltermann, Carmen, 72072 Tübingen (DE); Binder, Bernd, 72461 Albstadt/Truchtelfingen (DE)
(74) Vertreter: Rüger Abel Patentanwälte PartGmbB

(56) Entgegenhaltungen:
- EP-A2- 1 728 878
- WO-A1-91/15605
- CH-A5- 670 455
- JP-B2- 2 909 774

## Beschreibung

Die Erfindung betrifft ein Verfahren zur Herstellung eines Garniturdrahts für eine Ganzstahlgarnitur sowie einen Garniturdraht mit induktiv gehärteten Zähnen.

Zur Herstellung von Ganzstahlgarnituren wird ein Garniturdraht (Sägezahndraht) verwendet, wie er beispielsweise aus der DE 2904841 bekannt ist. Ein solcher Garniturdraht weist einen Fußabschnitt größerer Dicke und einen sich von dem Fußabschnitt weg erstreckenden gezahnten Wandabschnitt auf. Die dort ausgebildeten Zähne sind vor allem in der Nähe ihrer Zahnspitze gehärtet. Insgesamt weist der Garniturdraht vier Zonen unterschiedlicher Härte auf. In einem ersten, von der Zahnspitze ausgehenden, bis zu etwa zur halben Zahnhöhe reichenden Abschnitt hat der Garniturdraht eine Härte von mindestens 60 HRC. In der anschließenden Zone ist die Härte auf einen Wert von 60 HRC bis 55 HRC festgelegt. In der nächstanschließenden Zone wird eine Härte von 50 HRC bis 55 HRC in der Weise vorgesehen, dass in dem Bereich des Zahnfußes noch eine Härte von etwa 40 HRC vorliegt. Die übrige Zone, die von dem Fußteil des Drahts eingenommen wird, ist nicht gehärtet.

Die EP 1 728 878 A2 beschreibt das Härten eines Garniturdrahts mittels durch eine Flamme und nachfolgendes Abschrecken. Eine Schutzgasatmosphäre dient der Vermeidung der oberflächlichen Oxidation des Garniturdrahts. Weiter ist aus der WO 91/15605 A1 die Benutzung von Induktionsspulen zum Erhitzen eines Garniturdrahts bekannt. Die JP 2909774 B schlägt dazu vor, den Garniturdraht zunächst mit einer ersten Induktionsfrequenz von 500 kHz zu erwärmen, um ihn anzulassen. Nachfolgend wird er mittels höherer Frequenzen zum Beispiel ein MHz und 10 MHz behandelt, um ihn zu erhitzen und nachfolgend abzuschrecken.

**Zum** Härten wird härtbarer Stahl zunächst auf eine hohe Temperatur gebracht und dann abgeschreckt.

Die CH 670455 A5 sieht dazu vor, die Zähne eines Garniturdrahts unter Verwendung eines CO₂ Gaslasers durch Einzelimpulse oder Impulspakete kurzzeitig auf eine im Austenitisierungstemperaturbereich liegende Temperatur zu erhitzen. Aufgrund der geringen Wärmekapazität eines Zahns kühlt dieser danach an der Luft sehr schnell wieder ab, was eine Abschreckungshärtung bewirkt. Es kann eine Härte von 950 HV im gezahnten Bereich erreicht werden, wobei die Härte hier am Zahngrund lediglich 200 HV beträgt. Die Grenze zwischen gehärtetem und nicht gehärtetem Material verläuft als gebogene oder gerade Linie.

Zwar bewirkt die hohe Energie der Laserstrahlen ein schnelles Erhitzen, jedoch können sich Probleme bei der Gleichmäßigkeit des Energieeintrags und infolgedessen lokale Überhitzungen ergeben.

Die DE 101 06 673 A1 geht von der Erkenntnis aus, dass es schwierig ist, die Wärmebehandlung beim Härten stets nur auf definierte Bereiche einzugrenzen. Sie schlägt dazu vor, den Garniturdraht induktiv zu härten und dabei mit einer möglichst hohen Frequenz zu erhitzen, damit sich die Härtungswirkung im Wesentlichen auf die Zahnspitzen und die Oberfläche der Zähne des Garniturdrahts beschränkt. Dazu wird eine Frequenz von 1 bis 2 MHz vorgesehen. Die Erwärmung kann unter Schutzgas stattfinden. Der Härtungsvorgang erfolgt durch Abschrecken in Wasser, Luft oder Öl. Anschließend wird der Garniturdraht bei einer sehr geringen Anlasstemperatur von beispielsweise lediglich 130° C behandelt, um unerwünschte Spannungen zu beseitigen, ohne dass der Garniturdraht seine Härte verliert.

Es ist Aufgabe der Erfindung, ein verbessertes Konzept zur Erstellung und Gestaltung von Ganzstahlgarnituren zu schaffen. Insbesondere sollen dabei Zähne mit geometrisch präzisen Zahnspitzen ohne Nacharbeit erhalten werden.

Diese Aufgabe wird mit dem Verfahren nach Anspruch 1 gelöst:
Bei dem erfindungsgemäßen Verfahren wird der zur Herstellung der Garnitur vorgesehene Draht zunächst in einer ersten Station einem Erhitzungsprozess unterzogen, bei dem der Draht im Durchlauf sowohl in seinem Fußabschnitt als auch in seinem Wandabschnitt erwärmt wird. Bei dem Verfahren wird vor allem der Fußabschnitt durchströmt und erwärmt. Die Heizstation kann eine oder mehrere Wärmequellen umfassen.

Der Draht bzw. sein Fußabschnitt wird in der ersten Heizstation induktiv erwärmt. Dabei wird mit einer ersten Frequenz gearbeitet und das Feld des Induktors so ausgerichtet, dass der Fußabschnitt durch das Feld läuft. Die erste Frequenz ist vorzugsweise so gewählt, dass die im Draht entstehenden Wirbelströme vorwiegend den Fußabschnitt, weniger aber die Zähne durchsetzen. Vorzugsweise sind der Induktor und das von ihm erzeugte Magnetfeld dazu so ausgerichtet, dass der Wirbelstrom um die Drahtlängsachse fließt, d.h. die Achse des Magnetfeldes wenigstens näherungsweise mit der Längsachse des Drahts übereinstimmt. Die Zähne bleiben so von Wirbelströmen vorwiegend frei. Es ist aber auch möglich, die Achse des Magnetfeldes quer zu dem Draht zu orientieren. Die erste Heizstation kann einen oder mehrere Induktoren umfassen, die mit gleicher oder unterschiedlicher Frequenz arbeiten.

In der ersten Station wird der Draht an seinem Fußabschnitt auf die erste Temperatur vorerwärmt. Danach durchläuft der Draht in am Fußabschnitt vorerwärmten Zustand eine zweite Station zum Induktionserhitzen, wobei der Induktor der zweiten Station mit einer zweiten Frequenz arbeitet, die höher ist als die erste Frequenz. Das Feld des Induktors ist vorzugsweise so ausgerichtet, dass es nur den Wandabschnitt, d.h. die dort ausgebildeten Zähne erfasst. Die zweite Frequenz ist derart höher als die erste Frequenz, dass eine gleichmäßige Erwärmung der Zähne bis in die Zahnspitzen erreicht wird. Außerdem ist die zweite Temperatur höher als die erste Temperatur. Sie liegt insbesondere im Austenitisierungstemperaturbereich. Die zweite Station kann einen oder mehrere Induktoren umfassen, die mit gleicher oder unterschiedlicher Frequenz arbeiten. Es gilt, dass die Frequenzen der zweiten Induktoren größer sind als die Frequenzen der ersten Induktoren.

Nach Durchlaufen des (mindestens einen) zweiten Induktors wird mindestens der Wandabschnitt mit den Zähnen, vorzugsweise aber der gesamte Draht im Durchlauf in einem Kühlmedium abgeschreckt. Das Kühlmedium kann Gas, ein Inertgas, Luft, ein Aerosol, Öl, Wasser, eine Emulsion oder ein sonstiges inertes, reaktionsträges oder reaktionsfreudiges Medium sein. Durch die Vorerwärmung des Drahts in der ersten Station auf eine erste Temperatur und der Zuführung dieses erwärmten Drahts dem zweiten Induktor unter weitgehender Vermeidung einer Zwischenabkühlung wird verhindert, dass die Zähne nach Durchlaufen des zweiten Induktors durch die Wärmeabgabe an den Fußabschnitt ein Härtemaximum im Abstand zur Zahnspitze ausbilden. Vielmehr wird erreicht, dass ausgehend von der Zahnspitze eine gleichmäßige hohe Härte erreicht wird, die sich bis zu einer Übergangszone erstreckt. Erfindungsgemäß ist diese Übergangszone streifenartig geradlinig ausgebildet und kann eine Streifenbreite von zum Beispiel höchstens 0,5 mm aufweisen. Abhängig von der Zahngröße wird eine Breite der Übergangszone angestrebt, die höchstens 20% der Zahnhöhe, gemessen vom Zahngrund zur Zahnspitze, beträgt. Die Zonenbreite wird dabei in der gleichen Richtung wie die Zahnhöhe senkrecht zur Drahtlängsrichtung gemessen. Dies gilt sowohl für Messungen vor der Zahnbrust als auch für Messungen hinter dem Zahnrücken. Die mit dem erfindungsgemäßen Verfahren erreichbare kleinräumige Temperaturabstufung beim Härten hat eine Beschränkung der Breite der Härte-Übergangszone auf einen fast linienartigen Streifen zur Folge. Dies ergibt gegenüber flammgehärteten Garniturdrähten ein deutlich verbessertes Betriebsverhalten. Zähne verformen sich elastisch oder brechen. Plastische Verformungen der Zähne, d.h. seitliche Verbiegungen derselben, die den Kardierprozess erheblich stören, werden vermieden.

Die in dem Wandabschnitt vorgesehenen Ausnehmungen zur Ausbildung der Zähne können im Durchlauf in einem Stanzprozess erzeugt werden. Dazu kann der Draht schrittweise durch eine Stanzstation bewegt werden. Alternativ kann die Stanzstation während des Stanzprozesses mit dem Draht mitbewegt und nach Öffnen des Stanzwerkzeugs wieder in ihre Ausgangsposition zurückgefahren werden. Letzteres ermöglicht eine besonders gleichmäßige Drahtvorschubbewegung insbesondere in den Induktoren und der Abschreckstation. Es ist auch möglich, zwischen der Stanzstation und den Induktoren eine Drahtschleife auszubilden, die die ruckartige Drahtbewegung in der Stanzstation an die gleichmäßige Drahtbewegung in den Induktoren angleicht.

Vorzugsweise liegt die von dem ersten Induktor erzeugte Temperatur t1 unterhalb eines Austenitisierungstemperaturbereichs tA, während die von dem zweiten Induktor erzeugte Temperatur t2 innerhalb des Austenitisierungstemperaturbereichs tA liegt. Vorzugsweise liegt die erste Temperatur t1 oberhalb von 500°C und unterhalb von 900 °C (z.B. 700 - 750 °C), während die zweite Temperatur t2 bei etwa 950 °C liegen kann. Die erste Temperatur t1 ist eine Weichglühtemperatur und wird dabei vorzugsweise so hoch festgelegt, dass der Wärmeverlust der Zähne nach Durchlaufen des zweiten Induktors so gering ist, dass die Zähne beim Eintreten in die Abschreckstation noch eine Temperatur innerhalb des Austenitisierungstemperaturbereichs haben. Andererseits ist die Verweilzeit in der zweiten Heizstation und bis zum Abschrecken auch so gering, dass der Fußabschnitt in der zweiten Heizstation weder durch Wirbelströme noch durch Wärmeleitung aus den Zähnen eine wesentliche, hinsichtlich des Härtens relevante Temperaturerhöhung erfährt. Vielmehr ist sichergestellt, dass der Fußbereich beim Eintritt in die Abschreckstation eine Weichglühtemperatur von z.B. höchstens 680° aufweist. Auf diese Weise wird eine Zufallshärtung vermieden und eine gute Prozesskontrolle erreicht. Der erste Induktor und/oder der zweite Induktor können unter Schutzgas betrieben werden. Als Schutzgas eignen sich insbesondere reaktionsträge oder inerte Gase, wie, z.B. Stickstoff, Argon oder dergleichen. Der Begriff "Schutzgas" umfasst hier aber auch reaktionsfreudige, insbesondere reduzierende Gase, die zur Oberflächenreinigung beitragen können.

Es ist zweckmäßig, wenn die zweite Frequenz f2 wenigstens das 5fache der ersten Frequenz f1 ist. Erfindungsgemäß ist die erste Frequenz auf höchstens 5 MHz vorzugsweise höchstens 3 MHz festgelegt. Im bevorzugten Ausführungsbeispiel kann sie zwischen 1 und 5 MHz liegen. Die zweite Frequenz f2 beträgt erfindungsgemäß mindestens 10 MHz, weiter vorzugsweise mindestens 15 MHz. Bei einem bevorzugten Ausführungsbeispiel beträgt sie 20 MHz bis 30 MHz, vorzugsweise 27 MHz. Mit dieser Festlegung lässt sich eine gleich bleibende Qualität und eine gute Prozesskontrolle erzielen.

Nach dem Abschrecken kann der Draht durch einen dritten Induktor geführt werden, der mit einer dritten Frequenz f3 betrieben wird, die geringer ist als die zweite Frequenz f2. Der Draht kann auf eine dritte Temperatur t3 erwärmt werden, die mindestens geringer ist als die zweite Temperatur t2 und vorzugsweise auch geringer als die erste Temperatur t1. Damit kann ein induktives Anlassen bewirkt werden.

Es ist vorteilhaft, wenn das Induktionserhitzen in beiden Induktoren unter Inertgas, beispielsweise Stickstoff, erfolgt. Es entsteht eine blanke Ganzstahlgarnitur ohne Verzunderung, ohne Spitzenanschmelzungen der Zähne und mit kontrolliertem Härteverlauf. Insbesondere ist es möglich, die formgebende Bearbeitung vollständig im ungehärteten Zustand auszuführen. Mechanische formverändernde Nachbearbeitung, wie das Schleifen der Zahnspitzen und/oder eine chemische Bearbeitung oder dergleichen, ist im gehärteten Zustand nicht erforderlich.

Weiter ist es vorteilhaft, wenn der Draht an mindestens einer Seitenfläche gebürstet wird. Damit kann der in der Stanzstation erzeugte Stanzgrat beseitigt werden. Aufgrund der Härte des Materials kann der Stanzgrat leicht abbrechen und somit abgebürstet werden.

Ein mit dem genannten Verfahren hergestellter Garniturdraht hat wenigstens eine und vorzugsweise lediglich eine gebürstete Seitenfläche. Aufgrund der Induktionshärtung unter Schutzgas haben die ungebürsteten Seitenfläche, die Zahnbrustfläche und der Zahnrücken jedes Zahns die gleiche chemische Zusammensetzung. Fremdatome, die von der Bürste herrühren, sind lediglich an einer Seitenflanke des Garniturdrahts zu finden.

Der erfindungsgemäße, in Anspruch 8 definierte Ganzstahlgarnitur für Kardiermaschine besteht aus einem eine Längsrichtung festlegenden Draht, wobei der Garniturdraht einen Fußabschnitt mit einer Dicke aufweist, die größer ist, als die Dicke des Wandabschnitts und die Dicke der Zähne. Die Zähne sind gehärtet. Die Grenze zwischen dem gehärteten Bereich der Zähne und dem nicht gehärteten Material hat die Form eines geraden Streifens, dessen Breite höchstens 0,5 mm beträgt. Die Breite beträgt höchstens 20% der Zahnhöhe. So besteht der Zahn vorzugsweise nur aus ganz oder, in der kleinen Übergangszone, teilweise gehärtetem Material. Er weist vorzugsweise kein ungehärtetes und somit duktiles Material auf. Vorzugsweise ist die Härte außerhalb dieser Zone jeweils am Zahn einheitlich hoch und am Fußabschnitt einheitlich niedrig. Lokale Härtemaxima sowie insbesondere Härtezunahmen von der Zahnspitze weg zum Zahnfuß werden nicht verzeichnet.

Die streifenförmige Übergangszone ist bei größeren Zähnen von der Zahnspitze vorzugsweise z.B. mindestens 3 mm entfernt. Jedenfalls aber wird angestrebt, dass mindestens 70%, vorzugsweise mindestens 80% der Zahnhöhe durchgehärtet sind. Dies gilt sowohl für Messungen vor der Zahnbrust als auch für Messungen hinter dem Zahnrücken, weil die Übergangszone vorzugsweise parallel zu der Drahtlängsrichtung orientiert ist. So wird ein nachteiliges seitliches Verbiegen der Zähne ausgeschlossen. Erfindungsgemäß weist der Fußabschnitt eine Grundfläche auf und die Härte-Übergangszone ist innerhalb der Zähne ausgebildet. Vorzugsweise endet die Übergangszone etwas oberhalb des Zahngrundes. Es ist jedoch auch möglich, die Übergangszone so festzulegen, dass sie den Zahngrund berührt. Auf diese Weise wird eine maximal widerstandsfähige Zahnbrust erhalten, ohne die Biegsamkeit des Drahts zu stark einzuschränken. Eine derart präzise Festlegung der Härtegrenze lässt sich prozesssicher mit dem erfindungsgemäßen Verfahren erzielen.

Die Wandabschnitte und/oder die Zähne können im Querschnitt trapezförmig oder dreieckig und sich von dem Fußabschnitt weg verjüngend ausgebildet sein. Selbst bei erheblicher Dickenabnahme der Zähne vom Zahnfuß zur Zahnspitze hin kann die Zahnerwärmung, insbesondere im zweiten Induktor so kontrolliert ablaufen, dass Zahnspitzenanschmelzungen, wie sie insbesondere bei Erhitzung mit Gasflamme zu befürchten sind, hier nicht auftreten. Zum Beispiel kann die Zahndicke vom Zahnfuß zur Zahnspitze hin um mehr als ein Drittel abnehmen, beispielsweise von 0,6 auf 0,37 mm.

Weiter lässt sich mit dem erfindungsgemäßen Verfahren eine Ganzstahlgarnitur schaffen, bei dem die Zähne vom Zahngrund ausgehend einen sich bis zur Zahnspitze hin fortsetzenden geraden Verlauf haben. Dies insbesondere deshalb, weil ein Nachschleifen der Zahnspitzen aufgrund der erfindungsgemäßen Induktionshärtung nicht erforderlich ist.

Weitere Einzelheiten vorteilhafter Details der Erfindung ergeben sich aus den Ansprüchen, der Zeichnung oder der Beschreibung. Es zeigen:
Figur 1 den Prozessablauf beim erfindungsgemäßen Induktionshärten eines Drahts einer Ganzstahlgarnitur, in schematisierter Blockdarstellung.
Figur 2 den Draht zur Herstellung einer Ganzstahlgarnitur, in schematisierter Perspektivdarstellung.
Figur 3 den Draht nach Figur 2, in einer Querschnittsdarstellung.
Figur 4 den Draht nach Figur 3, in einer ausschnittsweisen Seitenansicht.
Figur 5 den Härteverlauf eines Zahns des Drahts nach Figur 3 bis 4 und
Figur 6 eine ausschnittsweise Querschnittsdarstellung des Drahts ähnlich Figur 3 mit Veranschaulichung der Zone des Härteübergangs.

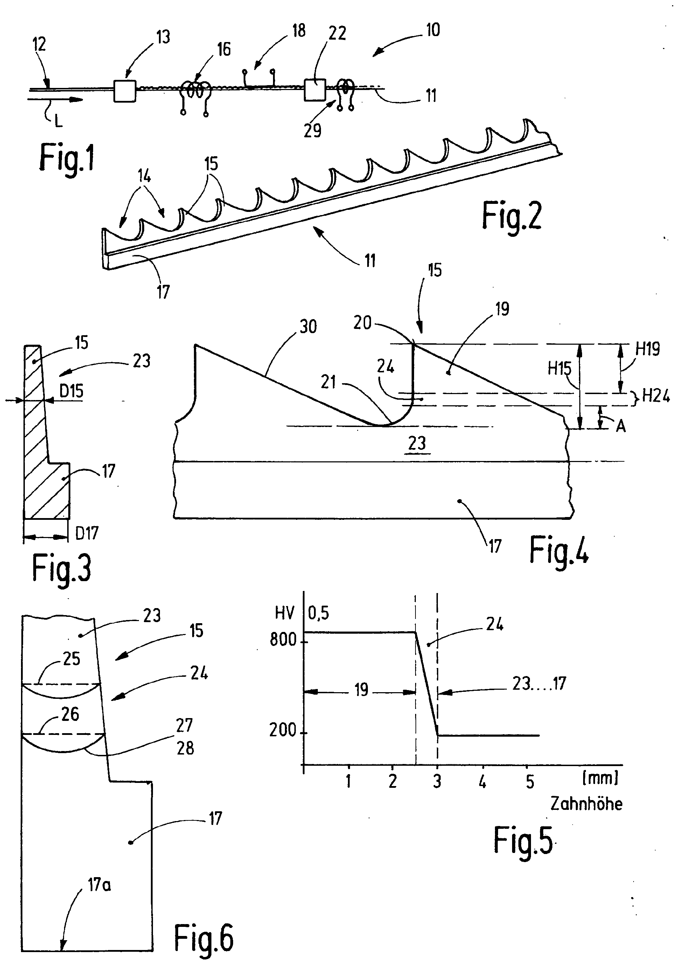

In Figur 1 ist eine Vorrichtung 10 zur Herstellung eines Drahts 11 veranschaulicht, wie er zum Aufbau einer Ganzstahlgarnitur einer Garniturwalze benötigt wird. Die Vorrichtung 10 dient zur Herstellung dieses Drahts 11 aus einem Profildraht 12, der in seiner Längsrichtung L durch die Stationen der Vorrichtung 10 bewegt wird.

Die Vorrichtung 10 umfasst unter anderem eine Stanzstation 13, die dazu dient, an dem Profildraht 12 Ausnehmungen 14 anzubringen (Figur 2) und somit Zähne 15 zu bilden. Vor der Stanzstation 13 können eine oder mehrere Richtstationen oder sonstige Stationen vorgesehen sein. Zusätzlich oder ergänzend kann nach der Stanzstation eine Schleifstation oder dergleichen angeordnet sein. Weitere vor oder nach der Stanzstation 13 angeordnete Stationen, z.B. zum Richten des Profildrahts 12 oder des Drahts 11 können bedarfsweise vorgesehen sein, sind jedoch nicht dargestellt.

Der Stanzstation 13 ist eine Heizstation, z.B. in Form eines ersten Induktors 16 nachgeordnet, der zur induktiven Erwärmung des Drahts 11 mit dient. Der erste Induktor 16 erzeugt dabei ein Feld, das mindestens den Fußabschnitt 17 des Drahts 11, gegebenenfalls aber auch seine Zähne 15 miterfasst. Der erste Induktor 16 arbeitet mit der ersten Frequenz f1 zwischen 100 kHz und 5 MHz, vorzugsweise zwischen 500 kHz und 2 MHz, im vorliegenden Ausführungsbeispiel mit 1 MHz. Erfindungsgemäß wird der Draht 11 dabei im Bereich seines Fußabschnitts 17 auf eine erste Temperatur t1 von vorzugsweise mehr als 300°C erwärmt. Im vorliegenden Ausführungsbeispiel beträgt die Temperatur t1 700°C bis 750°C. Sie ist vorzugsweise so festgelegt, dass beim späteren Abschrecken keine Härtung des Fußbereichs 17 erfolgt.

In einigem Abstand (z.B. wenige Dezimeter) zu dem ersten Induktor 16 ist ein zweiter Induktor 18 vorgesehen, der mit einer deutlich höheren Frequenz f2 arbeitet. Diese ist wenigstens 5, vorzugsweise wenigstens 10 und am meisten bevorzugt wenigstens 20 mal so hoch wie die erste Frequenz f1. Beispielsweise beträgt die zweite Frequenz f2 20 MHz bis 30 MHz, vorzugsweise 27 MHz. Der zweite Induktor 18 ist dabei vorzugsweise so ausgebildet, dass er lediglich die Zähne 15 oder einen Abschnitt jedes Zahns 15 erfasst. Zwischen den Induktoren 16 und 18 ist keine aktive Abkühlung des Drahts 11 vorgesehen. Vielmehr durchläuft der Draht 11 den Abstand in weniger als 2, vorzugsweise weniger als 1 s.

Figur 4 veranschaulicht einen Zahn 15 mit einer Zahnhöhe H15, die sich senkrecht zur Längsrichtung von dem Zahngrund 21 zu der Zahnspitze 20 erstreckt. Außerdem ist ein Abschnitt 19 des Zahns 15 festgelegt, der sich von der Zahnspitze 20 bis etwa zu seiner Mitte oder etwas weiter in Richtung des Zahngrunds 21 erstreckt. Der Abschnitt 19 hat eine Höhe H19, die vorzugsweise größer 70%, besser größer 80% der Zahnhöhe H15 ist. Jedenfalls aber erfasst der zweite Induktor 18 wenigstens den Abschnitt 19 jedes Zahns 15 oder auch einen etwas größeren Bereich. Vorzugsweise aber erfasst der zweite Induktor 18 den Zahngrund 21 nicht. Der zweite Induktor 18 und, falls gewünscht, auch der erste Induktor 16 können in einer Inertgasatmosphäre, z.B. aus Stickstoff arbeiten. Diese kann bis an eine Abschreckstation 22 herangeführt sein.

Nach Durchlauf durch die Induktoren 16 und 18 erreicht der Draht 11 die Abschreckstation 22 in heißem Zustand. Dabei hat der Fußabschnitt 17 eine unterhalb des Austenitisierungstemperaturbereichs tA liegende Temperatur t1, während der Abschnitt 19 jedes Zahns 15 eine im Austenitisierungstemperaturbereich tA liegende Temperatur t2 aufweist. Das Temperaturgefälle von dem Abschnitt 19 zu dem Fußabschnitt 17 bewirkt, dass der Draht 11 beim Einlaufen in die Abschreckstation 22 insbesondere an dem Abschnitt 19 gleichmäßig härtet, der Draht 11 im Übrigen jedoch ungehärtet bleibt.

Wie aus Figur 3 ersichtlich ist, weist der Fußabschnitt 17 eine quer zur Längsrichtung und senkrecht zur Seitenfläche zu messende Dicke D17 auf, die größer ist als die an jedem Zahn 15 zu messende Dicke D15. Das Wärmespeichervermögen des Fußes D17 ist größer als das Wärmespeichervermögen jedes Zahns 15. Ein zu großer Wärmeabfluss von dem Zahn 15 zu dem Fußabschnitt 17 vor Erreichen der Abschreckstation 22 wird jedoch durch die Anhebung der Temperatur des Fußabschnitts 17 auf die erste Temperatur t1 vermieden.

Von dem im Querschnitt typischerweise rechteckigen Fußabschnitt 17 erstreckt sich der Wandabschnitt 23 weg, der einen dreieckigen oder, wie dargestellt, trapezförmigen Querschnitt haben kann. Nach Durchlauf durch den zweiten Induktor 18 ist an dem Draht 11 eine Temperaturübergangszone 24 ausgebildet, in der die Temperatur von der weiten hohen Temperatur t2 (zum Beispiel 950°C) auf die erste niedrige Temperatur t1 (z.B. 550°C) abfällt, die unterhalb der Temperaturübergangszone 24 an dem verbleibenden Abschnitt der Wand 23 und dem Fußabschnitt 17 zu messen ist. Entsprechend ergibt sich beim Abschrecken nach Durchlauf durch die Abschreckstation 22 in dem Draht 11 der in Figur 5 veranschaulichte Härteverlauf. In dem Abschnitt 19 wird eine gleichmäßige hohe Härte von über 800 HV 0,5 erreicht. Aus der Temperaturübergangszone 24 hat sich eine Übergangszone 24 des Härteübergangs gebildet, in der die Härte von über 800 HV 0,5 auf ungefähr 200 HV 0,5 oder darunter abfällt. Diese Zone hat eine Vertikalausdehnung H24, gemessen von dem Fußabschnitt 17 weg, von vorzugsweise lediglich 20% der Zahnhöhe H15. Die Temperaturübergangszone 24 bildet einen geradlinig sich in Längsrichtung L erstreckenden Streifen mit einer Breite, die der Höhe H24 entspricht. Dieser Steifen kann in einem Abstand A zu dem Zahngrund 24 angeordnet sein. Es ist jedoch auch möglich und vorteilhaft, den Abstand A auf Null zu reduzieren, so dass die Zone 24 mit ihrer fußabschnittseitigen Grenze den Zahngrund 21 berührt. Weiter ist es möglich, die Übergangszone 24 noch tiefer zu legen, so dass der Zahngrund 21 im Bereich des Härteübergangs der Übergangszone 24 liegt.

Figur 6 veranschaulicht die Übergangszone 24 im Querschnitt. Die Grenzen der Übergangszone 24 erstrecken sich, wie Linien 25, 26 andeuten, gerade quer durch den Wandabschnitt 23 bzw. den jeweiligen Zahn 15. Es ist aber (bevorzugterweise) auch möglich, dass die Übergangszone 24 entlang gekrümmter Linien 27, 28 von dem gehärteten bzw. nicht gehärteten Bereich abgegrenzt ist, wobei diese Ausführungsform jedoch nicht unter Anspruch 8 fällt. Die Linien 25 und/oder 26 können erfindungsgemäß auch parallel zur Grundfläche 17a des Fußabschnitts 17 orientiert sein. Entsprechend enden die Linien 27 und/oder 28 an beiden Seiten des Zahns 15 jeweils auf gleicher Höhe. Nach einer dem Anspruch 8 nicht unterfallenden Ausführungsform folgen die Linien 27, 28 Bögen, die zu der Grundfläche 17a hin gekrümmt sind. Der Krümmungsmittelpunkt liegt vorzugsweise auf der von dem Fußabschnitt 17 weg liegenden Seite jeder Linie 27, 28, wiederum vorzugsweise innerhalb des Querschnitts des Zahns 15. Die Grenzen der Übergangszone 24 sind im Querschliffbild der Ganzstahlgarnitur sichtbar. Erfindungsgemäß kann jedoch alternativ durch entsprechende Festlegung der Temperatur t1 des Fußabschnitts 17 und durch Festlegung der Verweilzeit des Drahts 11 auf seinem Weg zwischen dem ersten Induktor 16 (oder der sonstigen Heizstation) und dem zweiten Induktor die thermische Last (Quelle oder Senke) des Fußabschnitts 17 so eingestellt werden, dass die Linien 25 und/oder 26 schräg zu der Grundfläche 17a verlaufen. Für die Linien 27 und/oder 28 gilt dann, dass sie an den beiden Seiten des Zahns 15 auf unterschiedlicher Höhe enden.

Bei dem erfindungsgemäßen Verfahren durchläuft ein mit Zähnen 15 versehener Draht 11 nacheinander einen ersten Induktor 16 und einen zweiten Induktor 18. Die Induktoren 16, 18 arbeiten mit unterschiedlichen Frequenzen f1, f2 und erzeugen unterschiedliche Temperaturen t1, t2. Der erste Induktor 16 erwärmt die nicht zu härtenden Fußabschnitte 17 auf eine hohe Temperatur t1 unterhalb des Austenitisierungstemperaturbereichs tA. Der zweite Induktor 18 erwärmt die Zähne 15 auf eine noch höhere zweite im Austenitisierungstemperaturbereich tA liegende Temperatur t2. Beim Abschrecken ergeben sich definiert gehärtete Zähne gleichbleibend hoher Qualität.

Zur Verbesserung der Eigenschaften des Drahts 11, insbesondere zum Abbau von Spannungen, kann der Draht einen dritten Induktor 29 durchlaufen. Dieser arbeitet mit einer dritten Frequenz f3, die zwischen 500 kHz und 5 MHz liegen kann und vorzugsweise zwischen 1 MHz und 2 MHz liegt. Die Frequenz f3 kann mit der ersten Frequenz f1 übereinstimmen. Die durch den dritten Induktor 29 erzeugte Temperatur t3 ist eine Anlasstemperatur von z.B. wenigen hundert Grad Celsius.

Außerdem kann der Draht 11 vor oder nach dem Anlassen durch eine Entgratungsstation geführt werden. In dieser können Stanzgrate, die beim Ausstanzen der Ausnehmungen 14 entstanden sein können, z.B. durch Bürsten beseitigt werden, die z.B. auf nur eine Flachseite der Zähne 15 einwirken.

Bei dem erfindungsgemäßen Verfahren durchläuft ein mit Zähnen 15 versehener Draht 11 nacheinander einen ersten Induktor 16 und einen zweiten Induktor 18. Die Induktoren 16,18 arbeiten mit unterschiedlichen Frequenzen und erzeugen unterschiedliche Temperaturen. Der erste Induktor 16 erwärmt den nicht zu härtenden Fußabschnitt 17 auf eine hohe Temperatur unterhalb des Austenitisierungstemperaturbereichs. Der zweite Induktor 18 erwärmt die Zähne 15 auf eine noch höhere zweite innerhalb des Austenitisierungstemperaturbereichs liegende Temperatur. Beim Abschrecken ergeben sich definiert gehärtete Zähne gleichbleibend hoher Qualität.

### Bezugszeichenliste

- 10: Vorrichtung
- 11: Draht
- 12: Profildraht
- 13: Stanzstation
- 14: Ausnehmungen
- 15: Zähne
- H15: Zahnhöhe
- 16: Erster Induktor oder sonstige Wärmequelle
- 17: Fußabschnitt
- t1: Erste Temperatur
- f1: Erste Frequenz
- 18: Zweiter Induktor
- t2: Zweite Temperatur
- f2: Zweite Frequenz
- 19: Abschnitt des Zahns 15
- 20: Spitze des Zahns 15
- 21: Zahngrund
- H19: Höhe des Abschnitts 19
- 22: Abschreckstation
- tA: Austenitisierungstemperaturbereich
- D17: Dicke des Fußabschnitts 17
- D15: Dicke des Zahns 15
- 23: Wandabschnitt
- 24: Temperaturübergangszone
- H24: Höhe der Zone
- A: Abstand
- 25,26,27,28: Linien
- f3: Dritte Frequenz
- t3: Dritte Temperatur
- 29: Dritter Induktor / sonstige Wärmequelle
- 30: Zahnrücken

## Patentansprüche

1. Verfahren zur Herstellung einer Ganzstahlgarnitur für Kardiermaschinen, wobei das Verfahren die folgenden Schritte aufweist:
Bereitstellen eines Drahts (11) mit einem Fußabschnitt (17) und einem Wandabschnitt (23), der sich von dem Fußabschnitt (17) weg erstreckt und eine geringere Dicke (D15) aufweist als dieser,
Anbringen von Ausnehmungen (14) in dem Wandabschnitt (23) des Rohmaterialdrahts zur Ausbildung von Zähnen (15),
Erhitzen des Fußabschnitts (17) des Drahts (11) im Durchlauf auf eine erste Temperatur (t1) mittels mindestens eines ersten Induktors (16) mit einer ersten Frequenz (f1), die höchstens 5 MHz beträgt,
Wenigstens abschnittsweises Induktionserhitzen des Wandabschnitts (23) des an dem Fußabschnitt (17) vorerhitzten Drahts (11) im Durchlauf mittels mindestens eines zweiten Induktors (18) mit einer zweiten Frequenz (f2) auf eine zweite Temperatur (t2),
wobei die zweite Temperatur (t2) höher ist als die erste Temperatur (t1) und wobei die zweite Frequenz (f2) wenigstens das Fünffache der ersten Frequenz (f1) ist und mindestens 10 MHz beträgt,
Abschrecken des Wandabschnitts (23) des Drahts (11) im Durchlauf mit einem Kühlmedium.

2. Verfahren nach Anspruch 1, **dadurch gekennzeichnet, dass** die Ausnehmungen (14) im Durchlauf in einem Stanzprozess erzeugt werden.

3. Verfahren nach einem der vorstehenden Ansprüche, **dadurch gekennzeichnet, dass** die erste Temperatur (t1) unterhalb eines Austenitisierungstemperaturbereichs (tA) und die zweite Temperatur (t2) innerhalb des Austenitisierungstemperaturbereichs (tA) liegt.

4. Verfahren nach einem der vorstehenden Ansprüche, **dadurch gekennzeichnet, dass** die erste Frequenz (f1) höchstens 3 MHZ beträgt und dass die zweite Frequenz (f2) mindestens 15 MHz beträgt.

5. Verfahren nach einem der vorstehenden Ansprüche, **dadurch gekennzeichnet, dass** der Draht (11) nach dem Abschrecken durch einen dritten Induktor (29) geführt wird, der mit einer dritten Frequenz (f3) betrieben wird, die geringer ist als die zweite Frequenz (f2), um den Draht auf eine dritte Temperatur zu erwärmen, die mindestens geringer als die zweite Temperatur (t2) und vorzugsweise geringer als die erste Temperatur (t1) ist.

6. Verfahren nach einem der vorstehenden Ansprüche, **dadurch gekennzeichnet, dass** mindestens das Induktionserhitzen mit der zweiten Frequenz (f2) auf die zweite Temperatur (t2) unter Schutzgas erfolgt.

7. Verfahren nach einem der vorstehenden Ansprüche, **dadurch gekennzeichnet, dass** der Draht (11) an mindestens einer Seitenfläche gebürstet wird.

8. Ganzstahlgarnitur für Kardiermaschinen, wobei die Ganzstahlgarnitur aus einem eine Längsrichtung (L) festlegenden Draht (11) mit einem Fußabschnitt (17) und mit einem Zähne (15) mit einer Zahnhöhe (H15) aufweisenden Wandabschnitt (23) besteht, der mindestens einen Abschnitt (19) mit gleichmäßiger erhöhter Härte aufweist und von dem Fußabschnitt (17) weg weist,
wobei der Fußabschnitt (17) eine Grundfläche (17a) aufweist und eine größere Dicke (D17) aufweist als der Wandabschnitt (23),
wobei
der Wandabschnitt (23) eine parallel zu der Längsrichtung (L) verlaufende, einer geraden Linie folgende Grenze in Form einer Härte-Übergangszone (24) aufweist, bei der die erhöhte Härte beginnt und deren Breite (H24) höchstens 20% der Zahnhöhe (H15) beträgt, wobei die Härte-Übergangszone (24) innerhalb der Zähne ausgebildet ist
wobei
die Härte-Übergangszone (24) sich entlang Linien (25, 26) erstreckende Grenzen aufweist, die sich gerade quer durch den Wandabschnitt (23) erstrecken, wobei die Linien (25 und/oder 26) parallel zu der Grundfläche (17a) des Fußabschnitts (17) orientiert sind oder schräg zu der Grundfläche (17a) verlaufen, so dass sie an den beiden Seiten des Zahns (15) auf unterschiedlicher Höhe enden.

9. Ganzstahlgarnitur nach Anspruch 8, **dadurch gekennzeichnet, dass** zwischen den Zähnen (15) ein Zahngrund (21) ausgebildet ist, wobei der Abstand der Härte-Übergangszone (24) von der Zahnspitze (20) vorzugsweise mindestens 70% der Zahnhöhe (H15) beträgt.

10. Ganzstahlgarnitur nach der Anspruch 8, **dadurch gekennzeichnet, dass** der Wandabschnitt (23) Zähne (15) aufweist zwischen den jeweils ein Zahngrund (21) ausgebildet ist und dass die Härte-Übergangszone (24) den Zahngrund (21) berührt oder enthält oder unterhalb desselben verläuft.

11. Ganzstahlgarnitur nach einem der Ansprüche 8 bis 10, **dadurch gekennzeichnet, dass** der Wandabschnitt (23) im Querschnitt trapezförmig oder dreieckig, sich von dem Fußabschnitt (17) weg verjüngend ausgebildet ist.

12. Ganzstahlgarnitur nach einem der Ansprüche 8 bis 11, **dadurch gekennzeichnet, dass** sie metallisch blank bzw. zunderfrei ist, wobei sie frei von Spuren einer chemischen Entgratung oder Nachbearbeitung sowie frei von Spuren einer beidseitigen mechanischen Nachbearbeitung ist.

## Claims

1. Method for producing a solid steel clothing for carding machines, wherein the method comprises the following steps:
provision of a wire (11) with a foot portion (17) and a wall portion (23) which extends away from the foot portion (17) and has a smaller thickness (D15) than this,
production of cut-outs (14) in the wall portion (23) of the raw material wire to form teeth (15),
heating of the foot portion (17) of the wire (11), in a continuous pass, to a first temperature (t1) by means of at least one first inductor (16) with a first frequency (f1) of maximum 5 MHz,
induction heating of at least portions of the wall portion (23) of the wire (11) preheated at the foot portion (17), in a continuous pass, to a second temperature (t2) by means of at least one second inductor (18) with a second frequency (f2),
wherein the second temperature (t2) is higher than the first temperature (t1), and
wherein the second frequency (f2) is at least five times the first frequency (f1) and at least 10 MHz,
quenching of the wall portion (23) of the wire (11), in a continuous pass, with a cooling medium.

2. Method according to claim 1, **characterized in that** the cut-outs (14) are produced in a continuous pass in a punching process.

3. Method according to one of the preceding claims, **characterised in that** the first temperature (t1) lies below a hardening temperature range (tA) and the second temperature (t2) lies inside the hardening temperature range (tA).

4. Method according to any of the preceding claims, **characterised in that** first frequency (f1) is at most 3 MHz and the second frequency (f2) is at least 15 MHz.

5. Method according to any of the preceding claims, **characterised in that** after quenching, the wire (11) is guided through a third inductor (29) which is operated at a third frequency (f3) that is lower than the second frequency (f2) in order to heat the wire to a third temperature which is at least lower than the second temperature (t2) and preferably lower than the first temperature (t1).

6. Method according to any of the preceding claims, **characterised in that** at least the induction heating to the second temperature (t2) with the second frequency (f2) takes place under inert gas.

7. Method according to any of the preceding claims, **characterised in that** the wire (11) is brushed on at least one side face.

8. Solid steel clothing for carding machines, wherein the solid steel clothing consists of a wire (11) establishing a longitudinal direction (L) and having a foot portion (17) and a wall portion (23) which comprises teeth (15) with a tooth height (H15), wherein said wall portion has at least one portion (19) of evenly increased hardness and points away from the foot portion (17),
wherein the foot portion (17) has a base surface (17a) and a greater thickness (D17) than the wall portion (23),
wherein the wall portion (23) has a border running parallel to the longitudinal direction (L) and following a straight line, in the form of a hardness transition zone (24) at which the increased hardness begins and the width of which (H24) amounts to maximum 20% of the tooth height (H15), wherein the hardness transition zone (24) is formed inside the teeth,
wherein the hardness transition zone (24) has borders extending along lines (25, 26) and extending transversely straight through the wall portion (24), wherein the lines (25 and/or 26) are oriented parallel to the base surface (17a) of the foot portion (17) or run obliquely to the base surface (17a) so that they end at different heights on the two sides of the tooth (15).

9. Solid steel clothing according to claim 8, **characterised in that** a tooth base (21) is formed between the teeth (15), wherein the distance of the hardness transition zone (24) to the tooth tip (20) preferably amounts to at least 70% of the tooth height (H15).

10. Solid steel clothing according to claim 8, **characterised in that** the wall portion (23) has teeth (15) between which a respective tooth base (21) is formed, and that the hardness transition zone (24) touches or contains or runs below the tooth base (21).

11. Solid steel clothing according to any of claims 8 to 10, **characterised in that** the wall portion (23) has a trapezoid or triangular cross-section and is formed tapering away from the foot portion (17).

12. Solid steel clothing according to any of claims 8 to 11, **characterised in that** it is metallically bright or scale-free, wherein it is free from traces of chemical deburring or treatment, and free from traces of mechanical machining on both sides.

## Revendications

1. Procédé de fabrication d'une garniture tout acier pour machines à carder, le procédé comprenant les étapes suivantes :
préparation d'un fil métallique (11) comportant une partie de pied (17) et une partie de paroi (23) s'étendant à partir de la partie de pied (17) et ayant une épaisseur (D15) plus faible que celle-ci,
réalisation d'évidements (14) dans la partie de paroi (23) du fil métallique de matière brute, en vue de former des dents (15),
chauffage de la partie de pied (17) du fil métallique (11) en passage continu, pour le porter à une première température (t1), au moyen d'au moins un premier inducteur (16) avec une première fréquence (f1) qui est au maximum de 5 MHz,
chauffage par induction, au moins par portions, de la partie de paroi (23) du fil métallique (11) qui est préchauffé dans la partie de pied (17), en passage continu à l'aide d'au moins un deuxième inducteur (18) avec une deuxième fréquence (f2), pour la porter à une deuxième température (t2),
la deuxième température (t2) étant supérieure à la première température (t1), et la deuxième fréquence (f2) valant au moins cinq fois la première fréquence (f1) et étant d'au moins 10 MHz,
trempe de la partie de paroi (23) du fil métallique (11), en passage continu, avec un fluide de refroidissement.

2. Procédé selon la revendication 1, **caractérisé en ce que** les évidements (14) sont réalisés en passage continu au cours d'un processus de découpage.

3. Procédé selon l'une des revendications précédentes, **caractérisé en ce que** la première température (t1) est inférieure à une plage de températures d'austénitisation (tA), et la deuxième température (t2) se situe dans la plage de températures d'austénitisation (tA).

4. Procédé selon l'une des revendications précédentes, **caractérisé en ce que** la première fréquence (f1) est au maximum de 3 MHz et **en ce que** la deuxième fréquence (f2) est au moins de 15 MHz.

5. Procédé selon l'une des revendications précédentes, **caractérisé en ce que**, après la trempe, on fait passer le fil métallique (11) dans un troisième inducteur (29) fonctionnant à une troisième fréquence (f3) qui est inférieure à la deuxième fréquence (f2), afin de chauffer le fil à une troisième température qui est au moins inférieure à la deuxième température (t2) et de préférence inférieure à la première température (t1).

6. Procédé selon l'une des revendications précédentes, **caractérisé en ce qu'**au moins le chauffage par induction avec la deuxième fréquence (f2), pour atteindre la deuxième température (t2), est effectué sous gaz protecteur.

7. Procédé selon l'une des revendications précédentes, **caractérisé en ce que** le fil métallique (11) est brossé sur au moins une surface latérale.

8. Garniture tout acier pour machines à carder, ladite garniture tout acier étant constituée d'un fil métallique (11) définissant une direction longitudinale (L) et comportant une partie de pied (17) et une partie de paroi (23) qui présente des dents (15) avec une hauteur de dent (H15) et comporte au moins une portion (19) de dureté accrue uniforme et s'étend dans la direction opposée à la partie de pied (17),
la partie de pied (17) ayant une surface de base (17a) et présentant une épaisseur (D17) qui est supérieure à celle de la partie de paroi (23),
la partie de paroi (23) présentant une limite qui est parallèle à la direction longitudinale (L) et suit une ligne droite sous la forme d'une zone de transition de dureté (24), dans laquelle commence la dureté accrue et dont la largeur (H24) correspond au maximum à 20% de la hauteur de dent (H15), la zone de transition de dureté (24) étant formée à l'intérieur des dents,
la zone de transition de dureté (24) présentant des limites qui s'étendent le long de lignes (25, 26) et passent transversalement et de façon rectiligne à travers la partie de paroi (23), les lignes (25 et/ou 26) étant orientées parallèlement à la surface de base (17a) de la partie de pied (17) ou étant obliques par rapport à la surface de base (17a), de sorte qu'elles se terminent à des hauteurs différentes sur les deux faces de la dent (15).

9. Garniture tout acier selon la revendication 8, **caractérisée en ce qu'**un fond de dent (21) est formé entre les dents (15), la distance de la zone de transition de dureté (24) par rapport à la pointe de dent (20) correspondant de préférence à au moins 70 % de la hauteur de dent (H15).

10. Garniture tout acier selon la revendication 8, **caractérisée en ce que** la partie de paroi (23) présente des dents (15), entre lesquelles est formé respectivement un fond de dent (21), et **en ce que** la zone de transition de dureté (24) est en contact avec le fond de dent (21) ou le contient ou s'étend au-dessous de celui-ci.

11. Garniture tout acier selon l'une des revendications 8 à 10, **caractérisée en ce que** la partie de paroi (23) est réalisée avec une section transversale trapézoïdale ou triangulaire, diminuant à partir de la partie de pied (17).

12. Garniture tout acier selon l'une des revendications 8 à 11, **caractérisée en ce qu'**elle présente un fini métallique brillant et/ou est exempte de calamine et ne comporte pas de traces d'ébavurage ou de post-traitement chimiques, ni de traces de post-traitement mécanique sur les deux faces.
